# EUROPEAN PATENT APPLICATION

(11) **EP 4 015 305 A1**
(43) Date of publication of application: **22.06.2022**
(21) Application number: 20214610.6
(22) Date of filing: 16.12.2020
(51) Int. Cl.: B60P 1/38, B60P 3/00, G06Q 50/28, B60P 1/52, B60P 7/06, B65G 21/20, B65G 47/54, B60P 1/36

(54) **A DELIVERY VEHICLE AND A METHOD OF DELIVERING ARTICLES TO A PLURALITY OF DELIVERY LOCATIONS BY USING THE DELIVERY VEHICLE**

(71) Applicant: Albert Heijn B.V., 1506 MA Zaandam (NL)
(72) Inventor: Leveling, Richard Sebastian, 3012 VE Rotterdam (NL); Visser, Tim, 1066 NJ Amsterdam (NL); Buschgens, Jacobus Cornelis, 3704 JB Zeist (NL)
(74) Representative: De Vries & Metman

(57) **Abstract**

A delivery vehicle (1) comprises a cargo space (2), an unloading location (3) for unloading an article (B) from the cargo space (2) and a loading location (4) for loading an article (B) to the cargo space (2), wherein the unloading location (3) is located at a distance from the loading location (4). The delivery vehicle (1) further comprises a drivable unloading conveyor (6) for transporting an article (B) from the cargo space (2) to the unloading location (3) along a final transport path which ends at the unloading location (3) and a drivable loading conveyor (7) for transporting an article (B) from the loading location (4) to the cargo space (2) along a final transport path which starts at the loading location (4). The delivery vehicle (1) comprises a transfer system (10-12) for transferring an article (B) from the loading conveyor (7) to a location at the unloading conveyor (6) which is remote from the unloading location (3).

## Description

The present invention relates to a delivery vehicle, comprising a cargo space, an unloading location for unloading an article from the cargo space, a loading location for loading an article to the cargo space, wherein the unloading location is located at a distance from the loading location, a drivable unloading conveyor for transporting an article from the cargo space to the unloading location along a final transport path which ends at the unloading location, and a drivable loading conveyor for transporting an article from the loading location to the cargo space along a final transport path which starts at the loading location.

Such a delivery vehicle is known from KR 10-1721234, which has a cargo box that is provided with multiple gates which form several loading and unloading locations for loading and unloading articles to and from the cargo space inside the cargo box. The known delivery vehicle is also provided with a drivable conveyor extending in longitudinal direction of the vehicle and several drivable conveyors extending in transverse direction of the vehicle.

In general, supermarket products that are transported to customers by a delivery vehicle are stored in boxes. A deliverer takes the filled boxes from the unloading location of the delivery vehicle and takes them to the customer's house. Mostly the deliverer receives empty boxes, which may be folded boxes, of an earlier delivery from the customer. The deliverer takes the empty boxes to the delivery vehicle and stores them in the cargo space. In order to increase efficiency of supermarket delivery services it is desired to unload filled boxes and load empty boxes as soon as possible.

The present invention aims to provide an improved delivery vehicle which provides the opportunity to minimize the time needed for unloading filled boxes and loading empty boxes at a customer.

For this purpose the delivery vehicle according to the invention comprises a transfer system for transferring an article from the loading conveyor to a location at the unloading conveyor which is remote from the unloading location.

The advantage of the invention is that the delivery vehicle provides a structured loading and unloading process, since articles to be delivered to a customer can be taken at the unloading location and returned articles from the customer can be loaded to the cargo space via the loading location. Furthermore, returned articles that are transported by the loading conveyor from the loading location can be transferred by the transfer system to a location at the unloading conveyor which is remote from the unloading location; the location at the unloading conveyor may be empty after an article at the unloading location has been taken out and the unloading conveyor has moved towards the unloading location in order to take a next article at the unloading location. For example, in case of delivering boxes including supermarket products, after the first delivery of a box the unloading conveyor may have a row of filled boxes extending from the unloading location in upstream direction and an empty box at the end of the row remote from the unloading location. In fact, when following a delivery route there is an article flow in the cargo space in a single direction from the loading location to the unloading location.

The loading conveyor and the unloading conveyor may be drivable separately from each other.

In a practical embodiment the loading conveyor and the unloading conveyor are arranged such that their respective transport paths extend perpendicularly with respect to each other.

In a particular embodiment the unloading conveyor is a first unloading conveyor and the delivery vehicle comprises a drivable second unloading conveyor for transporting an article from the cargo space to the unloading location along a final transport path which ends at the unloading location and which extends parallel to the transport path of the first unloading conveyor, wherein the transfer system is adapted to selectively transfer an article from the loading conveyor to the first unloading conveyor or to a location at the second unloading conveyor which is remote from the unloading location. In this case articles can be taken out from the cargo space at the unloading location from the first and the second unloading conveyors.

It is also possible to apply a loading conveyor and cooperating unloading conveyors at different height levels in the cargo space in order to use the height of the cargo space efficiently.

The transfer system may be provided with movable stopping elements for stopping an article at the loading conveyor at a location aligned with the first unloading conveyor or the second unloading conveyor, and a displacement mechanism for transferring a stopped article to the first unloading conveyor or the second unloading conveyor. The stopping elements force an article at the loading conveyor to be stopped at a desired location; the loading conveyor may be stopped when the article hits the selected stopping element, but it may also continue to move with respect to the stopped article.

The loading conveyor may comprise drivable rollers, which is a simple but appropriate conveying means for supporting and transporting articles, for example returned empty boxes in case of a delivery vehicle for supermarket products.

In a practical embodiment the displacement mechanism comprises a drivable belt which is located between two neighbouring rollers and movable in the same direction as the transport path of the unloading conveyor, wherein a pushing element is fixed to the drivable belt such that the pushing element projects above the neighbouring rollers when it moves between the neighbouring rollers under operating conditions. When an article on the loading conveyor has arrived at the drivable belt, it can be activated such that the pushing element displaces the article from the loading conveyor to the unloading conveyor.

The stopping elements may be located between respective pairs of two neighbouring rollers of the loading conveyor, wherein each of the stopping elements is liftable above the neighbouring drivable rollers.

The unloading conveyor may comprise a drivable belt for supporting and transporting articles, but alternative conveying means for supporting and transporting articles are conceivable.

Preferably, the unloading location is located at a rear side of the delivery vehicle and the loading location is located at a lateral side of the delivery vehicle. The deliverer can take out articles from the cargo space at the rear side and supply returned articles to the lateral side such that a cargo flow from the front to the rear is created.

The loading location and/or the unloading location may comprise a door, a shutter or the like in order to enable the deliverer to close the cargo space.

At least one of the unloading conveyor and the loading conveyor is drivable in opposite directions. If the unloading conveyor is drivable in opposite directions it is possible to load articles to the cargo space at a warehouse through the unloading conveyor, for example in reverse order of delivery. If the loading conveyor is drivable in opposite directions, it is possible to apply another loading location, for example the delivery vehicle may have two loading locations at respective opposite lateral sides of the delivery vehicle.

In a particular embodiment a frame for preventing an article from movement in lateral direction of the unloading conveyor is arranged along the unloading conveyor at a lateral side thereof, wherein the frame is provided with a holding member which is movable in transverse direction of the transport path of the unloading conveyor so as to temporarily hold an article at a fixed position with respect to the frame. The holding member can be moved away from an article at the unloading conveyor upon arrival at a delivery location so as to minimize friction between the article and the frame and moved to an article to stabilize it during traveling to a next delivery location.

The holding member may be adapted such that it is movable away from the frame in horizontal and downward direction such that a horizontal and downwardly directed force is exerted on an article to be hold. Particularly, in the event that the article comprises a stack of boxes it is advantageous when the stack is compressed during travelling.

In a preferred embodiment the holding member comprises an inflatable body which is located at a position above the unloading conveyor and which is controllable between an inflated condition and a deflated condition, wherein a first portion of the inflatable body is fixed to the frame, a second portion of the inflatable body above the first portion is movably mounted to the frame and a third portion of the inflatable body between the first portion and the second portion rests against the frame in at least the inflated condition. An advantage of this embodiment is that the holding member is moved horizontally and downwardly when inflating the inflatable body. Besides, it is a rather simple mechanism.

In a practical embodiment the inflatable body comprises a flexible sleeve and an inflatable tube which extends through the flexible sleeve, wherein the first portion is a lower portion of the flexible sleeve, the second portion is an upper portion of the flexible sleeve and the third portion is a portion of the flexible sleeve of which an outer surface rests against the frame in at least the inflated condition. Preferably the second portion is mounted to the frame through a spring, since this causes the flexible sleeve and the inflatable tube to return to the original condition when deflating the tube. The flexible sleeve can be made of a different material than the inflatable tube, for example a wear-resistant material for protecting the inflatable tube against direct contact with the articles to be transported or the frame.

The invention is also related to a method of delivering articles to a plurality of delivery locations by using the delivery vehicle as described hereinbefore, wherein articles are supplied to the unloading conveyor in order of delivery in a direction from the unloading location to the cargo space, wherein at a delivery location one of the articles closest to the unloading location is taken from the unloading conveyor and delivered, wherein a returned article from the delivery location is taken to the loading location and supplied to the loading conveyor, wherein the unloading conveyor transports a next article towards the unloading location, the loading conveyor transports the returned article from the loading location and the transfer system moves the returned article from the loading conveyor to the unloading conveyor. The step regarding supplying articles to the unloading conveyor in order of delivery in a direction from the unloading location to the cargo space means that the articles are loaded in reverse order of delivery. In other words, an article to be delivered at a first delivery location is closest to the unloading location.

The holding member may contact the articles at the unloading conveyor up to arrival at a delivery location, where the holding member is moved away from at least an article to be delivered at the delivery location, and wherein the holding member is moved to remaining articles at the unloading conveyor which are still not contacted by the holding member before leaving the delivery location.

The articles may be boxes including products, for example supermarket products and the returned article may be an empty box.

The invention will hereafter be elucidated with reference to the schematic drawings showing an embodiment of the invention by way of example.
Fig. 1 is a perspective cutaway view of a part of an embodiment of a delivery vehicle according to the invention.
Fig. 2 is a similar view as Fig. 1, but showing an inner side of the delivery vehicle.
Fig. 3 is a similar view as Fig. 2, but showing the inner side from an opposite side.
Fig. 4 is a side view of the inner side of the delivery vehicle as shown in Figs. 2 and 3.
Fig. 5 is a rear view of the inner side of the delivery vehicle as shown in Figs. 2 and 3.
Fig. 6 is a plan view of the inner side of the delivery vehicle as shown in Figs. 2 and 3.
Fig. 7 is a perspective view of a loading conveyor of the delivery vehicle according to Fig. 1.
Fig. 8 is a plan view of the loading conveyor as shown in Fig. 7.
Fig. 9 is a cross-sectional view of the loading conveyor as shown in Fig. 8 on a larger scale.
Fig. 10 is a sectional view of the loading conveyor as shown in Fig. 8.
Fig. 11 is a similar view as Fig. 9, but showing a different part of the loading conveyor on a larger scale.
Fig. 12 a perspective view of a holding member of the delivery vehicle according to Fig. 1.
Fig. 13 is a cross-sectional view of the holding member as shown in Fig. 12.
Fig. 14 is a similar view as Fig. 13, but showing the holding member in a different condition.

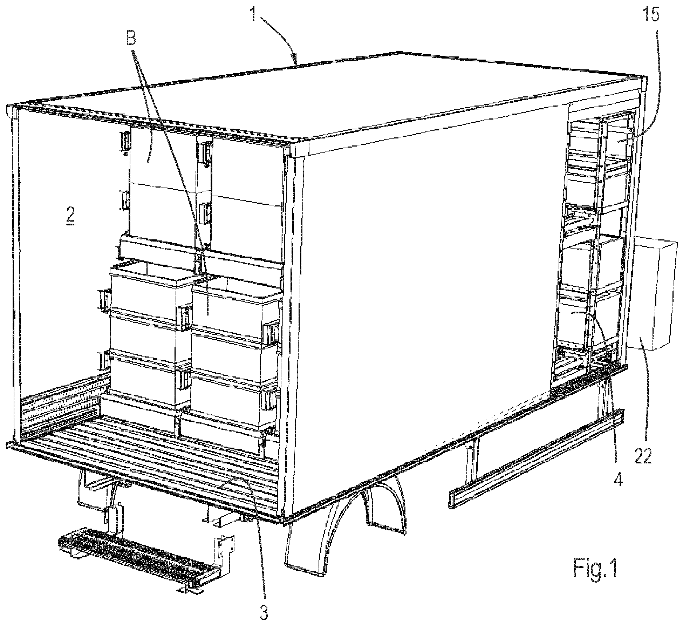

Fig. 1 shows a part of an embodiment of a delivery vehicle 1 according to the invention. The delivery vehicle 1 is intended for delivering supermarket products to different customers. In practice the delivery vehicle 1 is loaded at a warehouse and follows a predetermined route from customer to customer. The products are stored in boxes B. Frozen products are stored in insulated boxes B, which are not foldable, but other boxes B may be foldable.

Upon arrival at a customer a deliverer takes one or more boxes B including the products out of the delivery vehicle 1 and brings it or them to the customer. Usually, the boxes B including non-frozen products, which boxes are mostly foldable, stay at the customer until the next delivery, but the insulated boxes B including frozen products are emptied by the deliverer or the customer and returned immediately to the deliverer together with empty boxes B of an earlier delivery. The deliverer takes the returned boxes B to the delivery vehicle 1.

The delivery vehicle 1 comprises a closable cargo space 2 which is accessible by doors (not shown) at a rear side and at opposite lateral sides of the delivery vehicle 1. At the rear side of the delivery vehicle 1 is an unloading location 3 for unloading boxes B from the cargo space 2. In this case the deliverer can climb into the cargo space 2 in order to take the boxes B which are closest to the rear side. At the opposite lateral sides of the delivery vehicle 1 are respective loading locations 4 for loading empty boxes B to the cargo space 2. The unloading location 3 is located at a distance from both loading locations 4. The term unloading location 3 is used because of the intended use of the delivery vehicle 1 during a delivery operation, but it is possible to use the unloading location 3 also for supplying boxes B to be delivered to the cargo space 2 at a warehouse.

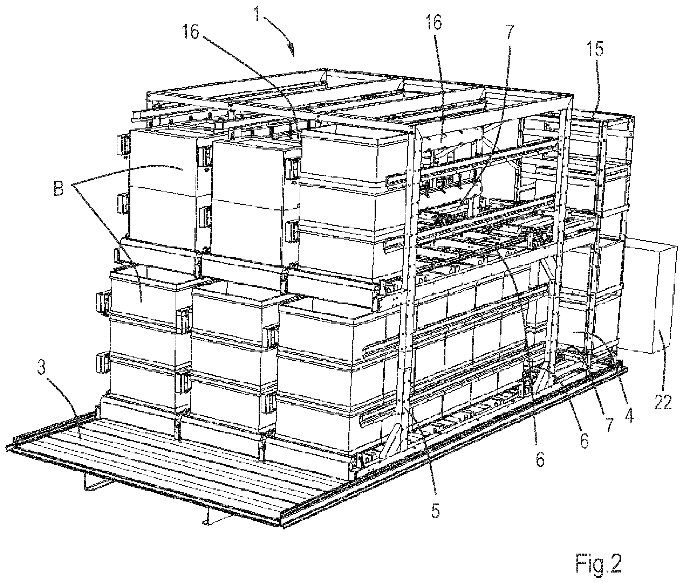

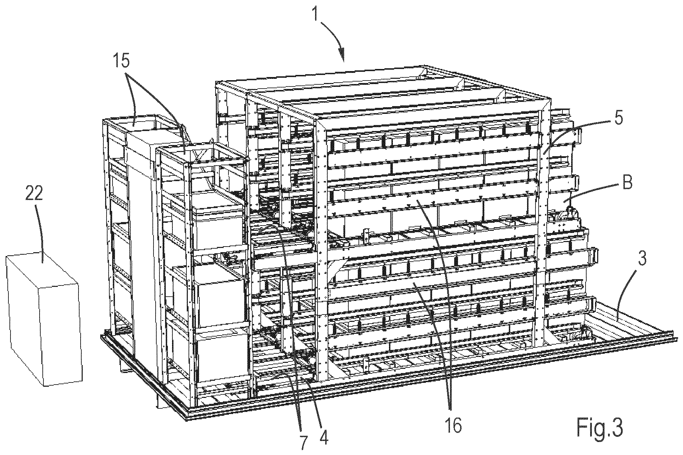

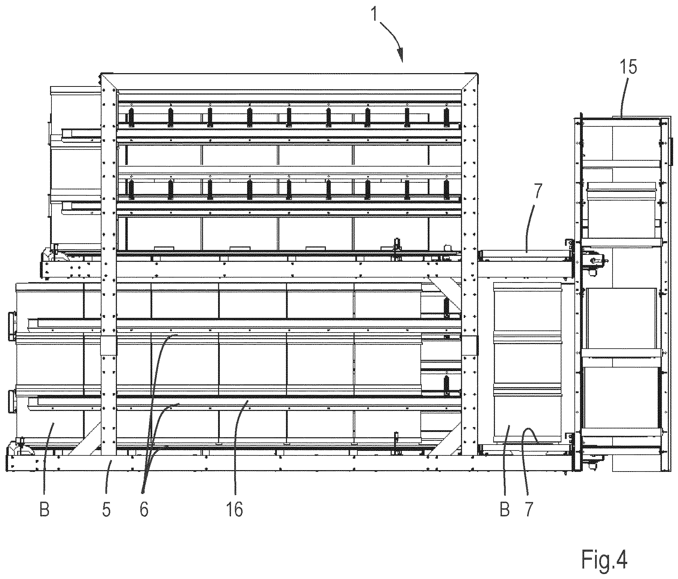

Figs. 2-6 show the cargo space 2 of the delivery vehicle 1 as seen from different sides. In the cargo space 2 is a frame 5 which rests on a bottom of the delivery vehicle 1. The frame 5 comprises six drivable unloading conveyors 6. The unloading conveyors 6 extend parallel to each other in a direction of driving of the delivery vehicle 1. Three of the unloading conveyors 6 are located at a lower level of the cargo space 2 and three of the unloading conveyors 6 are located at an upper level of the cargo space 2. In this case each of the unloading conveyors 6 can support and transport stacks of three boxes B, as illustrated in Fig. 2. Each of the unloading conveyors 6 defines a rectilinear final transport path which starts at a start location of the unloading conveyor 6 within the cargo space 2 and ends at the unloading location 3. The start location of the unloading conveyor 6 is remote from the unloading location 3 and the distance between the start location and the unloading location 3 defines the number of stacks of boxes B that can be loaded on the unloading conveyor 6. In the embodiment as shown each of the unloading conveyors 6 is provided with two parallel drivable endless conveyor belts for supporting and transporting the stacks of boxes B, but alternative conveying means are conceivable.

Fig. 2 shows that the boxes B may have different heights. Four of the unloading conveyors 6 support stacks of three boxes B and two of them support stacks of two boxes B. The boxes B of the stack of two boxes B are insulated boxes and are higher than the non-insulated boxes B. Preferably, the lengths and the widths of the boxes B are more or less the same such that the different boxes B can be loaded to all of the unloading conveyors 6.

The frame 5 also comprises two drivable loading conveyors 7. The loading conveyors 7 extend above and parallel to each other. One of the loading conveyors 7 is located at the lower level of the cargo space 2 where three of the unloading conveyors 6 are located and one of the loading conveyors 7 is located at the upper level of the cargo space 2 where three of the unloading conveyors 6 are located. Each of the loading conveyors 7 defines a rectilinear final transport path which starts at one of the loading locations 4 and extends along the start locations of the respective unloading conveyors 6 which are located at the same height level of the loading conveyor 7.

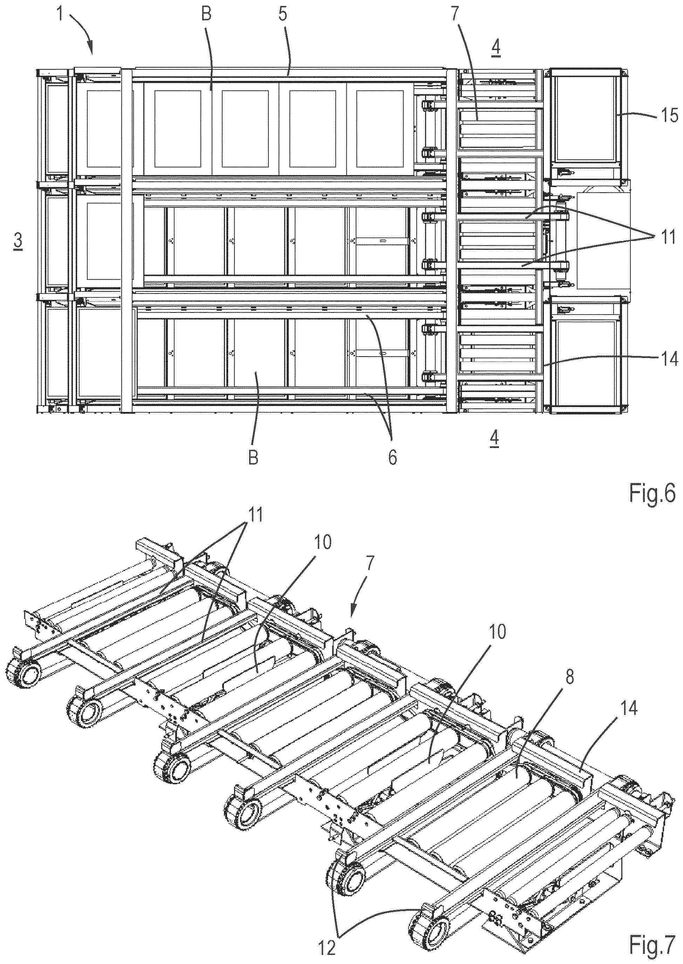

In this case the loading conveyors 7 and the unloading conveyors 6 are adapted such that their respective transport paths extend perpendicularly with respect to each other. Since the delivery vehicle 1 has two opposite loading locations 4 each of the loading conveyors 7 is drivable in opposite directions. Each of the loading conveyors 7 comprises a drivable roller conveyor for supporting and transporting the returned empty or folded boxes B, as shown in more detail in Figs. 7, 8 and 10. These figures show that each of the loading conveyors 7 comprises parallel rollers 8 which are drivably coupled to each other through belts 9 that are drivable by an electric motor (not shown). Upon activating the electric motor the rollers 8 are rotated in the same rotational direction. It is noted that at both loading locations 4 there are three freely rotatable rollers onto which the deliverer can place returned boxes B and push them onto the drivable rollers 8.

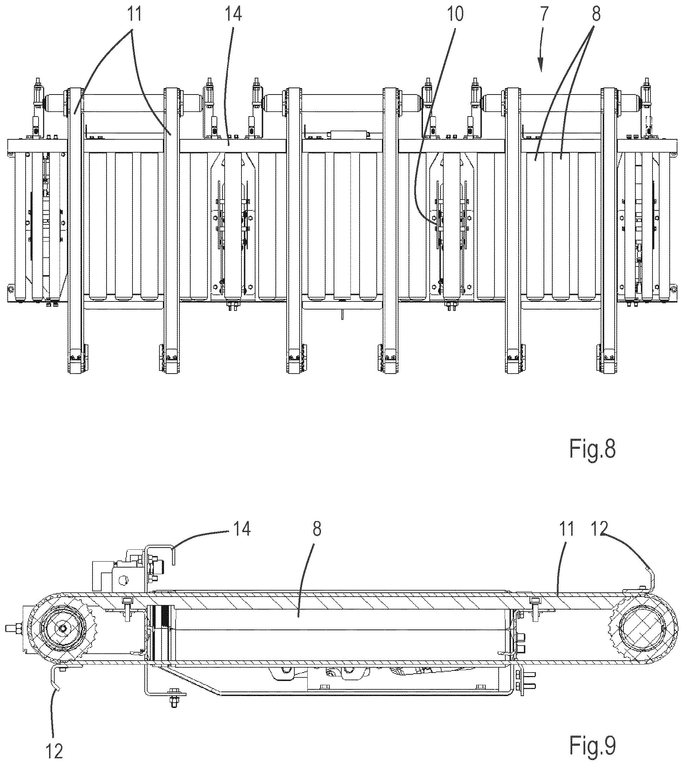

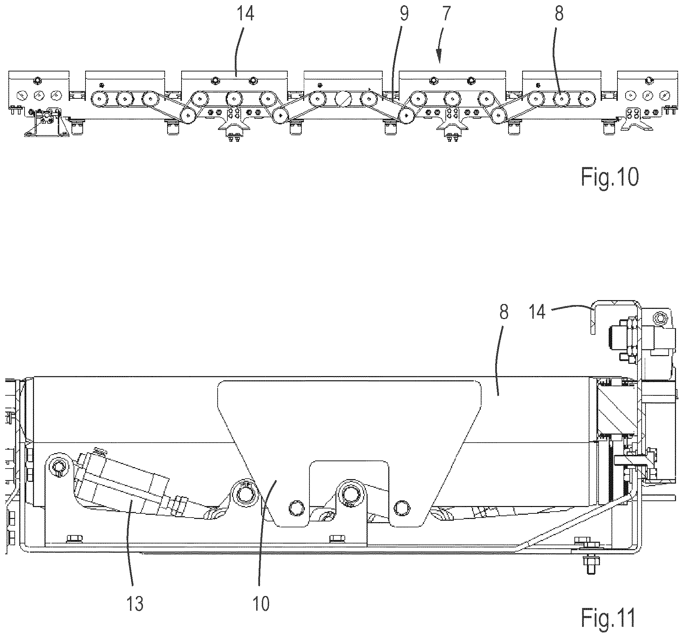

The delivery vehicle 1 comprises a transfer system for transferring the empty or folded boxes B selectively from each of the loading conveyors 7 to one of the start locations of the unloading conveyors 6 which are located at the same height level. In the embodiment as shown in the figures the transfer system is provided with liftable stopping elements 10 for stopping a box B on the loading conveyor 7 and a displacement mechanism in the form of two parallel endless conveyor belts 11 that are each provided with two pushing elements 12 for pushing the empty boxes B in lateral direction of the loading conveyor 7. The stopping elements 10 are vertical plates which are located between respective pairs of two neighbouring rollers 8 of the loading conveyor 7. Figs. 7 and 8 show that there are six stopping elements 10 in this case. Each of the stopping elements 10 is liftable above the neighbouring rollers 8 by means of a pneumatic cylinder 13, see Fig. 11. Fig. 11 illustrates a situation in which the stopping element 10 is in a lowered position. It is noted that numerous alternative controllable stopping elements are conceivable.

The pairs of conveyor belts 11 of the transfer system are movable in the same direction as the unloading conveyors 6. They are positioned at locations which are aligned with the unloading conveyors 6. The loading conveyor 7, the stopping elements 10 and the conveyor belts 11 are positioned with respect to each other and controllable such that when an empty box B is placed on the rollers 8 at one of the loading locations 4 the rollers 8 are rotated in order to displace the empty box B further into the cargo space 2, whereas one of the stopping elements 10 is lifted such that the empty box B abuts against the lifted stopping element 10 and the empty box B is aligned to a selected unloading conveyor 6, after which the pushing elements 12 of the corresponding pair of conveyor belts 11 displace the empty box B in the direction of the selected unloading conveyor 6. Consequently, the empty box B is positioned at the start location of the selected unloading conveyor 6.

Figs. 7 and 8 show a guide rail 14 along the loading conveyor 7. The guide rail 14 comprises recesses at the conveyor belts 11 through which the conveyor belts 11 including the pushing elements 12 can pass. The pushing elements 12 are arranged such that each conveyor belt 11 can be driven a half loop in order to move one pushing element 12 from the guide rail 14 to the start location of the corresponding unloading conveyor 6.

After taking out a first stack of boxes B from one of the unloading conveyors 6 at a delivery location the unloading conveyor 6 can move the remaining stacks of boxes B on the unloading conveyor 6 towards the unloading location 3. Consequently, an empty space arises on the unloading conveyor 6 at its start location. This means that an empty box B on the loading conveyor 7 can be moved to the start location of the unloading conveyor 6. This process can be repeated at next delivery locations. Hence, after finishing all deliveries and returning to the warehouse, the unloading conveyors 6 or a part thereof may be filled with empty boxes and/or folded boxes B. These can be unloaded from the delivery vehicle 1 easily by activating the unloading conveyors 6.

A part of the cargo space 2 is used as a storage room 15 for storing boxes B including products which could not be delivered at a delivery location, for example in the event that a customer is not at home.

When the delivery vehicle 1 is loaded at the warehouse in order to start a new delivery route the boxes B including products can be loaded on the unloading conveyors 6 in reverse order of delivery. For this reason the unloading conveyors 6 are drivable in opposite directions such that the boxes B can be loaded at the unloading location 3.

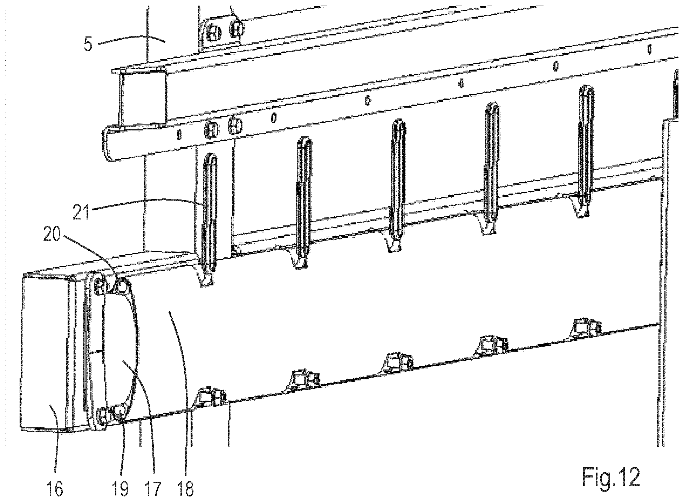

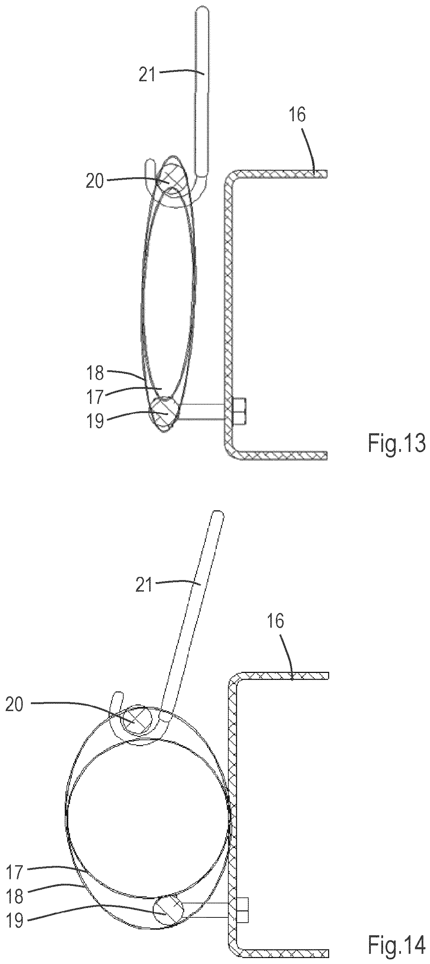

The frame 5 has longitudinal beams 16 along the respective unloading conveyors 6. The beams 16 prevent the stacks of boxes B from movement in lateral direction with respect to the unloading conveyors 6, for example when the delivery vehicle 1 follows a curved road. In order to keep the boxes B in position during travelling but provide freedom with respect to the beams 16 during loading and unloading a part of the beams 16 are provided with holding members in the form of inflatable tubes 17 which are accommodated within respective flexible sleeves 18 along the unloading conveyors 6. This is shown in more detail in Figs. 12-14. Fig. 12 shows that a rear end of the inflatable tube 17 is fixed to the corresponding beam 16. A lower rod 19 and an upper rod 20 extend along the beam 16 between the inflatable tube 17 and the flexible sleeve 18. A lower portion of the flexible sleeve 18 is mounted to the lower rod 19 which in turn is fixed to the beam 16, see Figs. 13 and 14. An upper portion of the flexible sleeve 18 is mounted to the upper rod 20, which in turn is mounted to the frame 5 through springs in the form of elastic members 21. Hence, the upper rod 20 is resiliently movable with respect to the beam 16.

Fig. 13 illustrates a condition in which the tube 17 is deflated and Fig. 14 illustrates a condition in which the tube 17 is inflated. When the tube 17 is inflated the thickness of the flexible sleeve 18 in horizontal direction will increase. At the same time the flexible sleeve 18 will move downwardly because of the fixed position of the lower rod 19. Consequently, in the event that the flexible sleeve 18 contacts a box B or a stack of boxes B on the unloading conveyor 6 it will exert a downwardly directed force thereon. This is particularly advantageous in case of boxes B which are stacked onto each other and partly fit into each other. A downwardly directed force minimizes the risk of separating the boxes B from each other when travelling on a bumpy road, for example. When deflating the tube 17 the elastic members 21 return the flexible sleeve 18 into the original deflated condition as shown in Fig. 13.

Furthermore, since the horizontal distance between a centreline of the flexible sleeve 18 and its contact location with the beam 16 in inflated condition of the tube 17 is larger than the horizontal distance between the lower rod 19 and the beam 16 the flexible sleeve 18 tends to rotate downwardly about the lower rod 19. This provides an additional downwardly directed force on the boxes B.

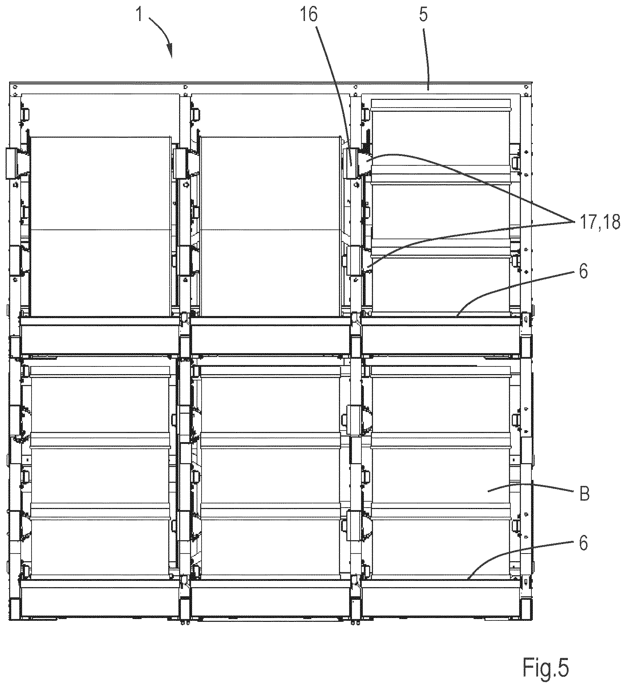

Fig. 5 shows that at each of the unloading conveyors 6 there are two combinations of flexible sleeves 18 and inflatable tubes 17 located above each other. The stacks of boxes B on each of the unloading conveyors 6 are clamped between these combinations and opposite sides of the frame 5.

The air for inflating the tubes 17 and the pneumatic cylinders 13 is supplied by a container for compressed air, which is in communication with an air compressor (not shown). The delivery vehicle 1 is provided with a controller for controlling the unloading conveyors 6, the loading conveyors 7, the stopping elements 10, the conveyor belts 11 and the inflatable tube 17. The controller is located in a control box 22. The delivery vehicle 1 may comprise sensors for providing detection signals to the controller. An example of a detection signal is an arrival of the delivery vehicle 1 at a delivery location, which may be a signal to the controller to deflate the inflatable tubes 17 so as to enable the deliverer to easily take out a stack of boxes B. Another example of a detection signal is a signal that may be generated by motion sensors at the loading locations 4 such that the controller automatically drives the loading conveyor 7 in a direction away from the loading location 4 where the deliverer supplies an empty box B.

The holding member as described hereinbefore can also be used in a different application than in a delivery vehicle. In other words, it can be defined by the following aspects:
Aspect 1: A system for temporarily holding an article, comprising a frame including a supporting surface for supporting an article and an inflatable body which is located at a position above the level of the supporting surface and which is controllable between an inflated condition and a deflated condition, wherein a first portion of the inflatable body is fixed to the frame, a second portion of the inflatable body above the first portion is movably mounted to the frame and a third portion of the inflatable body between the first portion and the second portion rests against the frame in at least the inflated condition.
   Since the first portion is fixed to the frame and the second portion is movable with respect to the frame the inflatable body will not only grow in thickness in horizontal direction upon inflating, but will also move the second portion towards the first portion, i.e. a portion of the inflatable body remote from the first portion tends to move downwardly. This means that when the inflatable body is located between an article on the supporting surface and the frame the inflatable body can exert a downwardly directed force on the article.
Aspect 2: The system according to aspect 1, wherein the inflatable body comprises a flexible sleeve and an inflatable tube which extends through the flexible sleeve, wherein the first portion is a lower portion of the flexible sleeve, the second portion is an upper portion of the flexible sleeve and the third portion is a portion of the flexible sleeve of which an outer surface rests against the frame in at least the inflated condition. In this case the inflatable tube may be separate from the flexible sleeve and the flexible sleeve may protect the inflatable tube.
Aspect 3: The system according to aspect 1 or 2, wherein the second portion is mounted to the frame through a spring.
Aspect 4: The system according to any one of the preceding aspects, wherein the horizontal distance between the lower portion and the frame is smaller than the horizontal distance between a centreline of the inflatable body and the frame in the inflated condition of the inflatable body. This may cause the inflatable body to rotate about the first portion in downward direction with respect to the frame.

In the delivery vehicle 1 as described hereinbefore the supporting surface is formed by a bearing surface of the unloading conveyor 6, the first portion is formed by a lower portion of the flexible sleeve 18 which is fixed to the longitudinal beam 16 through the lower rod 19 and the second portion is formed by an upper portion of the flexible sleeve 18 which is movably mounted to the frame 5 through the upper rod 20 and the springs 21.

The invention is not limited to the embodiment shown in the drawings and described hereinbefore, which may be varied in different manners within the scope of the claims and their technical equivalents. For example, the unloading conveyor, the loading conveyor and the transfer system may be configured for conveying different articles through the cargo space than boxes.

## Claims

1. A delivery vehicle (1), comprising a cargo space (2), an unloading location (3) for unloading an article (B) from the cargo space (2), a loading location (4) for loading an article (B) to the cargo space (2), wherein the unloading location (3) is located at a distance from the loading location (4), a drivable unloading conveyor (6) for transporting an article (B) from the cargo space (2) to the unloading location (3) along a final transport path which ends at the unloading location (3), and a drivable loading conveyor (7) for transporting an article (B) from the loading location (4) to the cargo space (2) along a final transport path which starts at the loading location (4) **characterized in that** the delivery vehicle (1) comprises a transfer system (10-12) for transferring an article (B) from the loading conveyor (7) to a location at the unloading conveyor (6) which is remote from the unloading location (3).

2. A delivery vehicle (1) according to claim 1, wherein the loading conveyor (7) and the unloading conveyor (6) are arranged such that their respective transport paths extend perpendicularly with respect to each other.

3. A delivery vehicle (1) according to claim 1 or 2, wherein the unloading conveyor is a first unloading conveyor (6) and the delivery vehicle (1) comprises a drivable second unloading conveyor (6) for transporting an article (B) from the cargo space (2) to the unloading location (3) along a final transport path which ends at the unloading location (3) and which extends parallel to the transport path of the first unloading conveyor (6), wherein the transfer system (10-12) is adapted to selectively transfer an article (B) from the loading conveyor (7) to the first unloading conveyor (6) or to a location at the second unloading conveyor (6) which is remote from the unloading location (3).

4. A delivery vehicle (1) according to claim 3, wherein the transfer system is provided with movable stopping elements (10) for stopping an article (B) at the loading conveyor (7) at a location aligned with the first unloading conveyor (6) or the second unloading conveyor (6), and a displacement mechanism (11, 12) for transferring a stopped article (B) to the first unloading conveyor (6) or the second unloading conveyor (6).

5. A delivery vehicle (1) according to any one of the preceding claims, wherein the loading conveyor (7) comprises drivable rollers (8).

6. A delivery vehicle (1) according to claim 5, wherein the displacement mechanism comprises a drivable belt (11) which is located between two neighbouring rollers (8) and drivable in the same direction as the transport path of the unloading conveyor (6), wherein a pushing element (12) is fixed to the drivable belt (11) such that the pushing element (12) projects above the neighbouring rollers (8) when it moves between the neighbouring rollers (8) under operating conditions.

7. A delivery vehicle (1) according to any one of the preceding claims and claims 4 and 6, wherein the stopping elements (10) are located between respective pairs of two neighbouring rollers (8) of the loading conveyor (7), wherein each of the stopping elements (10) is liftable above the neighbouring drivable rollers (8).

8. A delivery vehicle (1) according to any one of the preceding claims, wherein the unloading location (3) is located at a rear side of the delivery vehicle (1) and the loading location (4) is located at a lateral side of the delivery vehicle (1).

9. A delivery vehicle (1) according to any one of the preceding claims, wherein at least one of the unloading conveyor (6) and the loading conveyor (7) is drivable in opposite directions.

10. A delivery vehicle (1) according to any one of the preceding claims, wherein a frame (5, 16) for preventing an article (B) from movement in lateral direction of the unloading conveyor (6) is arranged along the unloading conveyor (6) at a lateral side thereof, wherein the frame (5, 16) is provided with a holding member (17, 18) which is movable in transverse direction of the transport path of the unloading conveyor (6) so as to temporarily holding an article (B) at a fixed position with respect to the frame (5, 16).

11. A delivery vehicle (1) according to claim 10, wherein the holding member comprises an inflatable body (17, 18) which is located at a position above the unloading conveyor (6) and which is controllable between an inflated condition and a deflated condition, wherein a first portion of the inflatable body (17, 18) is fixed to the frame (5, 16), a second portion of the inflatable body (17, 18) above the first portion is movably mounted to the frame (5, 16) and a third portion of the inflatable body (17, 18) between the first portion and the second portion rests against the frame (5, 16) in at least the inflated condition.

12. A delivery vehicle (1) according to claim 11, wherein the inflatable body comprises a flexible sleeve (18) and an inflatable tube (17) which extends through the flexible sleeve (18), wherein the first portion is a lower portion of the flexible sleeve (18), the second portion is an upper portion of the flexible sleeve (18) and the third portion is a portion of the flexible sleeve (18) of which an outer surface rests against the frame (5, 16) in at least the inflated condition, wherein preferably the second portion is mounted to the frame (5, 16) through a spring (21).

13. A method of delivering articles to a plurality of delivery locations by using the delivery vehicle (1) according to any one of the preceding claims, wherein articles (B) are supplied to the unloading conveyor (6) in order of delivery in a direction from the unloading location (3) to the cargo space (2), wherein at a delivery location one of the articles (B) closest to the unloading location (3) is taken from the unloading conveyor (6) and delivered, wherein a returned article (B) from the delivery location is taken to the loading location (4) and supplied to the loading conveyor (7), wherein the unloading conveyor (6) transports a next article (B) towards the unloading location (3), the loading conveyor (7) transports the returned article (B) from the loading location (4) and the transfer system (10-12) moves the returned article (B) from the loading conveyor (7) to the unloading conveyor (6).

14. A method of delivering articles (B) according to claim 13 and using the delivery vehicle (1) according to any one of the claims 10-12, wherein the holding member (17, 18) contacts the articles (B) at the unloading conveyor (6) up to arrival at a delivery location, where the holding member (17, 18) is moved away from at least an article (B) to be delivered at the delivery location, and wherein the holding member (17, 18) is moved to remaining articles (B) at the unloading conveyor (6) which are still not contacted by the holding member (17, 18) before leaving the delivery location.

15. A method of delivering articles according to claim 13 or 14, wherein the articles are boxes (B) including products and the returned article (B) is an empty box.
